# EUROPEAN PATENT SPECIFICATION

(11) **EP 2 293 291 B1**
(45) Date of publication and mention of the grant of the patent: **28.12.2016**
(21) Application number: 10174027.2
(22) Date of filing: 25.08.2010
(51) Int. Cl.: G10L 15/28, G10L 17/00, H04M 3/50, H04M 3/38, G10L 15/30

(54) **User identity identifying method, device and call center system**
Benutzeridentität-Identifizierungsverfahren, Vorrichtung und Anruf-Centersystem
Procédé d'identification de l'identité d'un utilisateur, dispositif et système de centrale d'appels

(30) Priority: 26.08.2009 CN 200910091620
(43) Date of publication of application: 09.03.2011
(73) Proprietor: Huawei Technologies Co., Ltd., Longgang District Shenzhen, Guangdong 518129 (CN)
(72) Inventor: Pan, Jian, Shenzen Guangdong 518129 (CN); Zhan, Shengmin, Shenzhen Guangdong 518129 (CN)
(74) Representative: Epping - Hermann - Fischer

(56) References cited:
- EP-A2- 1 976 255
- US-A1- 2004 121 813
- US-A1- 2008 071 545

## Description

### FIELD OF THE TECHNOLOGY

The present invention relates to the filed of communications technologies, and more particularly to a user identity identifying method, a user identity identifying device, and a call center system.

### BACKGROUND OF THE INVENTION

A call center is an operation station for automatically processing various incoming and outgoing call services by using modem communications technologies and computer technologies. The manual services in the call center are processed by adopting an agent mode, and the so-called agent mode means that an operator performs service processing via a telephone and a computer.

In the call center system, when an incoming call service originated by a user enters the call center, the call center system identifies the user's identity, and calls out the user's personal and historical transaction information from a database for displaying on a agent terminal, and thus the efficiency for the agent mode is improved and the user is provided with pertinent information services.

Recently, a processing mode of identifying a user's identity through voiceprint identifying technology is provided, where the sound of the user is recorded for a period of time since the incoming call service begins, and the recorded voice file is compared with a standard voice bank of a voiceprint identifying system of the call center to identify the user's identity. The specific process includes the following steps. The user dials a telephone number of the call center, and an operator answers the call; a sound recording system is started to record the sound of the user and the operator; the sound record file is saved when the recording duration exceeds a predetermined duration; a service system of the call center
transfers the sound record file to a voiceprint identifying system, the voiceprint identifying system compares the sound record file with the voice file of the user preserved in a standard voice bank.

In implementing the present invention, the inventor finds that the existing technology at least has the following problems.

Existing voiceprint identifying technologies have requirements for sound duration, so hysteresis exists in the user identity identification. With the existing processing mode of user identity identification, the sound record file includes not only the sound of the user, but also the sound of the operator, and thus the time required for existing user identity identification is the sum of the duration of the sound record file and the identification duration, and the hysteresis in the user identity identification is enhanced.

US 2008/0071545 A1 discloses a communications system. The system obtains verification of an expected identity of a party from a remote centralized biometric system over a communications network. A forwarder forwards, over a communications network to the remote centralized biometric system when the party attempts to obtain a service using the communications system, a biometric sample from the party and information characterizing the expected identity of the party. A receiver receives, over the communications network from the remote centralized biometric system, verification that the biometric sample matches biometric information obtained by the remote centralized biometric system from a storage such that the expected identity of the party is verified as the identity of the party. The service is provided contingent on verification of the expected identity of the party as the identity of the party.

### SUMMARY OF THE INVENTION

The present invention is directed to a user identity identifying method, a user identity identifying device, and a call center system, for solving the problem of hysteresis in the user identity identification.

The objects of the present invention are achieved through the following technical solutions.

The present invention is defined in the independent claims. Preferred embodiments are defined in the dependent claims.

The present invention provides a user identity identifying method, which includes the following steps.

Voice information of a client joining in a voice site of a call center is sent to a voiceprint identifying device by using a channel of the voice site.

A voiceprint identification result returned by the voiceprint identifying device is received, and a user identity corresponding to the voice information of the client is validated according to the voiceprint identification result.

The present invention provides a user identity identifying device, which includes a sending control unit and a receiving processing unit.

The sending control unit is configured to send voice information of a client joining in a voice site of a call center to a voiceprint identifying device by using a channel of the voice site.

The receiving processing unit is configured to receive a voiceprint identification result returned by the voiceprint identifying device, and validating a user identity corresponding to the voice information of the client according to the voiceprint identification result.

The present invention further provides a call enter system, which includes a user identity identifying device and a voiceprint identifying device.

The user identity identifying device is configured to send voice information of a
client joining in a voice site of a call center to the voiceprint identifying device by using a channel of the voice site, and receive a voiceprint identification result returned by the voiceprint identifying device, validate a user identity corresponding to the voice information of the client according to the voiceprint identification result.

The voiceprint identifying device is configured to identify the voice information of the client and return the voiceprint identification result to the user identity identifying device.

It can be seen from the technical solutions provide by the present invention that, in the embodiments of the present invention, the voice signals of a client are sent to a voiceprint identifying device in real time through a channel of a voice site without the need of recording the sound signals of the client, and thus the time required for the user identity identification is reduced, and the hysteresis in the user identity identification is decreased effectively.

### BRIEF DESCRIPTION OF THE DRAWINGS

To illustrate the technical solutions according to the embodiments of the present invention or in the prior art more clearly, the accompanying figures for describing the embodiments or the prior art are introduced briefly in the following. Apparently, the accompanying drawings in the following description are only some embodiments of the present invention; persons of ordinary skill in the art can obtain other drawings according to the accompanying drawings without paying any creative efforts.
FIG. 1 is a schematic view of a processing procedure according to an embodiment of the present invention;
FIG. 2 is a schematic view of a processing procedure of user identity identification according to an embodiment of the present invention;
FIG. 3 is a schematic view of another processing procedure of user identity identification according to an embodiment of the present invention;
FIG. 4 is a schematic view of another processing procedure of user identity identification according to an embodiment of the present invention;
FIG. 5 is a schematic structural view of a device according to an embodiment of the present invention;
FIG. 6 is a schematic structural view of another device according to an embodiment of the present invention; and
FIG. 7 is a schematic structural view of a call center system according to an embodiment of the present invention.

### DETAILED DESCRIPTION OF THE EMBODIMENTS

The technical solutions in the embodiments of the present invention are described clearly below in conjunction with the accompanying drawings in the embodiments of the present invention; obviously, the embodiments described are only some, but not all, of the embodiments of the present invention. Other embodiments acquired by persons of ordinary skill in the art according to embodiments of the present invention without paying for creative work all fall within the protection scope of the present invention.

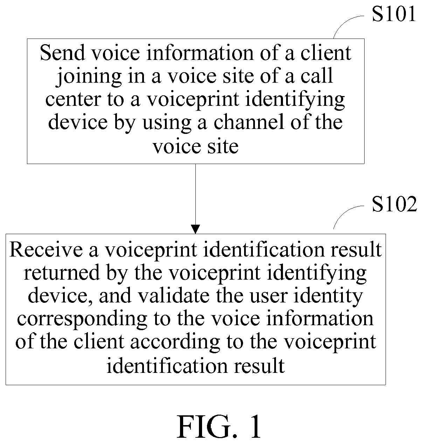

In an embodiment, the present invention provides a user identity identifying method, the processing procedure of which is shown in FIG. 1. When a telephone service is established between a client and a call center, if it needs to identify the user's identity, the following steps are performed.

In step S101, voice information of the client joining in a voice site of the call center is sent to a voiceprint identifying device by using a channel of the voice site.

In step S102, a voiceprint identification result returned by the voiceprint identifying device is received, and a user identity corresponding to the voice information of the client is validated according to the voiceprint identification result.

The voice site is a communication form in which the site members transfer voice signals in a form of single channel. The control terminal (such as a service system) of the voice site is capable of extracting the sound information of individual site members in the voice site. The above-mentioned channel of the voice site refers to a single channel.

A voice signal with a duration of 8 seconds is sufficient to meet the requirement of voiceprint identification, so the time during which the voice signal is transferred to the voiceprint identifying system can be pre-set to 8 seconds. The specific implementation of the sending the voice information of the client joining in the voice site to the voiceprint identifying device includes: sending the voice information of the client to the voiceprint identifying device and starting timing; and stopping sending the voice information of the client to the voiceprint identifying device when a duration of the timing reaches a pre-set duration.

In this embodiment of the present invention, the voice signals of a client are sent to a voiceprint identifying device in real time through a channel of a voice site without the need of recording the sound signals of the client, and thus the time required for the user identity identification is reduced, and the hysteresis in the user identity identification is decreased effectively.

In the above embodiment of the present invention, the voice site may exist before the establishment of the telephone service, and after the telephone service is established, the service system controls the client of the telephone service to join the voice site. The voice site may also be created after the establishment of the telephone service, and the created voice site includes the client of the telephone service. Specifically, when the voice site is created, the client is considered to be a site unit of the audio site, and a site channel is established for the client, through the site channel the voice information is transferred.

In order not to waste system management resources, the above created voice site may be deleted after the user identity corresponding to the voice information of the client is validated. The specific operation of deleting the voice site refers to removing the channel for the site members in the voice site and deleting the site resources.

In order to send the voice information of the client to the voiceprint identifying device through the channel of the voice site, a connection is established between the voice site and the voiceprint identifying device before sending the voice information.

In the above embodiment of the present invention, before sending the voice information of the client to the voiceprint identifying device, the voice site is controlled to detect whether the voice site is capable of sending the voice information of the client to the voiceprint identifying device, which specifically includes: determining whether the channel for the client exists in the voice site, determining whether the voiceprint identifying device is connected with the voice site, and determining whether the call center is equipped with the voiceprint identifying device.

The specific implementations of the embodiments of the present invention in practical applications are illustrated below in detail.

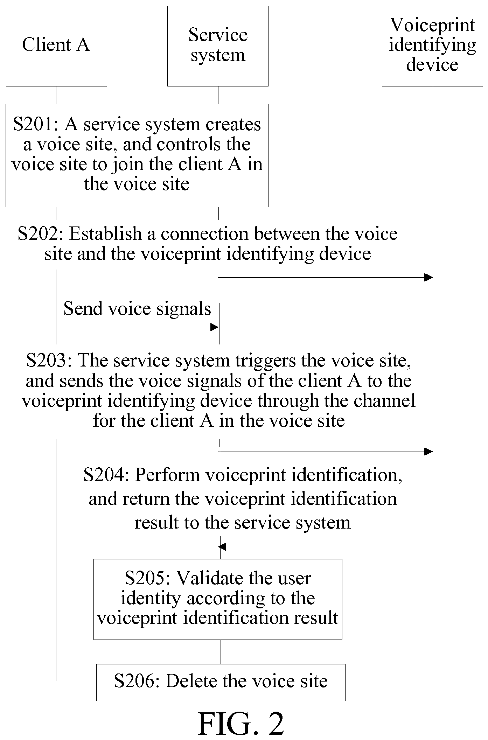

When user a dials the telephone number of the call center through a client A, an operator b in the call center answers the phone call of user a through a agent terminal B, thus establishing a telephone service between the client A and the agent terminal B. If it is required to identify the user identity of user a through a voiceprint identification technology in order to provide better services for the user, a processing procedure of identity identification according to an embodiment of the present invention is shown in FIG. 2, which includes the following steps.

In step S201, after the telephone service between user a and the call center is established, a service system of the call center creates a voice site, and controls the voice site to join the client A in the voice site.

For example, the service system may create a voice site through the following procedure. The service system receives a site request message sent within the system, searches for the number of idle channels, and determines whether the number of the idle channels meets the number of users requesting to join in the voice site. If sufficient idle channels exist, the idle channels required by creating the voice site are occupied to create the voice site.

In step S202, when the client A joins in the voice site, the service system establishes a connection between the voice site and the voiceprint identifying device so as to identify the user identity of user a through the voiceprint identifying technology.

The service system establishing the connection between the voice site and the voiceprint identifying device may be accomplished through a negotiated private protocol, and may also be accomplished by communications through a standard media resource control protocol (MRCP). The specific implementation of the service system establishing the connection between the voice site and the voiceprint identifying device is introduced below by taking establishing the connection through the MRCP protocol as an example.
1. The service system controls the voice site to perform session initiation protocol (SIP) negotiation with the voiceprint identifying device, and during the negotiation, the voiceprint identifying device carries in an Invite message its IP address, a real-time transport protocol (RTP) port number, and supported encoding and decoding types.
2. After the SIP negotiation succeeds, the service system controls the voice site to return to the voiceprint identifying device a 200 OK message carrying the IP address, a transmission control protocol (TCP) port number, the RTP port number, and the negotiated encoding and decoding types of the service system.
3. The voiceprint identifying device controls the resources allocated by the service system by sending an MRCP protocol message on the TCP connection.
4. The voiceprint identifying device accomplishes voiceprint identifying services by receiving voice data transmitted on the established RTP connection.

In step S203, the service system triggers the voice site, and sends voice signals of the client A to the voiceprint identifying device through the single channel for the client A in the voice site, and preferably, the pre-set duration of sending the voice signals may be 8 seconds.

In step S204, the voiceprint identifying device receives the voice signals and matches the received voice signals with the sound file stored in the database of the voiceprint identifying device, so as to perform voice identification on the voice signals and returns the voiceprint identification result to the service system. For example, the voiceprint identification result may include that whether user a is a registered user, and if so, the voiceprint identification result further includes the registration information of user a, and so on.

The voiceprint identifying device may return the voiceprint identification result to the service system through the channel in the voice site, and may also return the voiceprint identification result to the service system directly through the established connection with the service system.

In step S205, the service system validates the user identity according to the received voiceprint identification result.

In step S206, the service system deletes the voice site after the validation of the user identity is completed.

Furthermore, in step S201, the service system of the call center may further join an agent terminal B in the voice site, and the conversation between user a and operator b is achieved by delivering voice signals through the channel of the voice site.

With the above process of the first embodiment of the present invention, the service system validates the user identity of user a, thus can send the user identity information to the agent terminal B, so as to provide the user with personalized services.

Since the user identity identifying mode provided in the first embodiment of the present invention does not need to record the conversation of a user, but rather to deliver the voice information of the user in real time to the voiceprint identifying device, thus decreasing the delay in the user identity identification. Moreover, only the voice signals of the client, but not the voice signals of the agent terminals, are transferred to the voiceprint identifying device with a single channel of the site, and thus the delay in the user identity identification is further decreased. The user identity identifying method provided in the first embodiment of the present invention improves process efficiency.

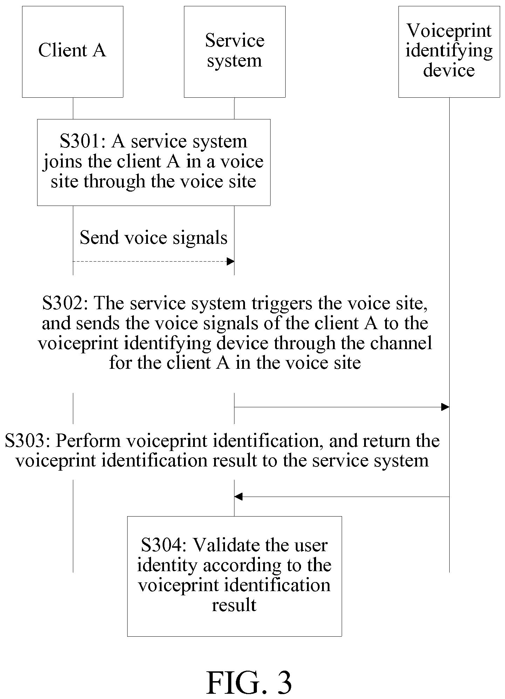

In the call center, for an established voice site, the agent terminals have joined in the voice site, and a connection has been established between the voice site and the voiceprint identifying device. When user a dials the telephone number of the call center through a client A, an operator b in the call center answers the phone call of user a through a agent terminal B, and thus a telephone service between the client A and the agent terminal B is established. If it is required to identify the user identity of user a in order to provide better services for the user, another identity identifying process of the embodiment of the present invention is shown in FIG. 3, which includes the following steps.

In step S301, the service system joins the client A in the voice site through the voice site after a telephone service is established between user a and the call center.

In step S302, after the clients A has joined in the voice site, the service system triggers the voice site, and sends voice signals of the client A to the voiceprint identifying device through a single channel for the client A in the voice site, and preferably, the pre-set duration of sending the voice signals may be 8 seconds.

In step S303, the voiceprint identifying device receives the voice signals and matches the received voice signals with the sound file stored in the database of the voiceprint identifying device, so as to identify the voice signals and returns the voiceprint identification result. For example, the voiceprint identification result includes that whether user a is a registered user, and if so, the voiceprint identification result further includes the registration information of user a, and so on.

In step S304, the service system validates the user identity according to the voiceprint identification result.

In the step S303, the voiceprint identifying device may return the voiceprint identification result to the service system through the single channel in the voice site, and may also return the voiceprint identification result to the service system directly through the established connection with the service system.

In the above method provided by the embodiment of the present invention corresponding to FIG. 3, if a connection is not established in advance between the voice site and the voiceprint identifying device, before step S302, the method further includes an operation of establishing the connection between the voice site and the voiceprint identifying device. The process of establishing the connection may be the same as that set forth in the step S202, and is not repeated any more.

In the embodiment of the present invention, since the voice signals of a client are sent to a voiceprint identifying device in real time through a channel of a voice site without the need of recording the sound signals of the client, and thus the time required for the user identity identification is reduced, and the hysteresis in the user identity identification is decreased effectively. Furthermore, in the embodiment of the present invention, the voice site is established before connecting the telephone service of the client A, and thus the time required for the user identity identification further saved.

Both the above embodiments of the present invention corresponding to FIGs. 2 and 3 introduce in detail the user identity identification by taking the incoming call service of the client as an example. If the user identity needs to be identified during the process of the outgoing call service or other telephone services at the call center, the identifying process is similar to the above embodiments and the process of the embodiments corresponding to FIGs. 2 and 3, and thus is not repeated here.

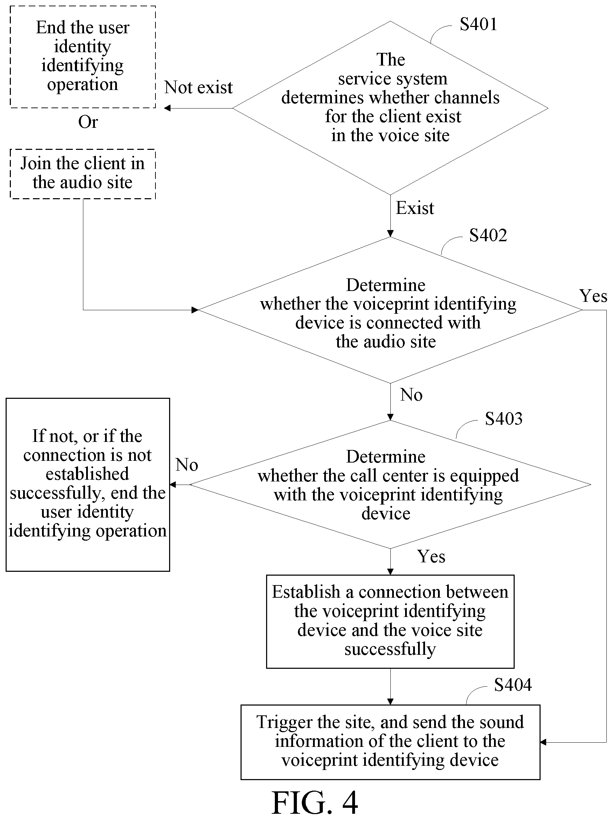

In order to ensure that the voice site operates normally and is capable of sending the sound signals of the client successfully to the voiceprint identifying device, the availability of the channels and connection of the site may be checked before sending the sound signals to the voiceprint identifying device, and the specific operation is as shown in FIG.4, which includes the following steps.

In step S401, the service system determines, through the voice site, whether channels for the client (that is, the client whose user identity need to be identified) exist, and if channels for the client exist, step S402 is performed; if channels for the client do not exist, the client is joined in the voice site and step S402 is performed, or the user identity identifying operation ends.

In step S402, the service system determines, through the voice site, whether the voiceprint identifying device is connected with the voice site, and if the voiceprint identifying device is connected with the voice site, step S404 is performed; the voiceprint identifying device is not connected with the voice site, step S403 is performed.

In step S403, the service system determines whether the call center is equipped with the voiceprint identifying device through the voice site, and if the call center is equipped with the voiceprint identifying device through the voice site, a connection between the voiceprint identifying device and the voice site is established, and S404 is performed after the connection is established successfully; if the call center is not equipped with the voiceprint identifying device through the voice site, or the connection is not established successfully, the user identity identifying operation ends.

In step S404, the service system triggers the voice site, and sends the sound information of the client to the voiceprint identifying device.

All or part of the steps for implementing the above method embodiments may be accomplished by a program instructing relevant hardware. The program may be stored in a computer readable storage medium. When executed, the program can perform the steps of the above method embodiments. The above-mentioned storage medium includes various media that can store program codes such as a ROM, a RAM, a magnetic disk, or an optical disc.

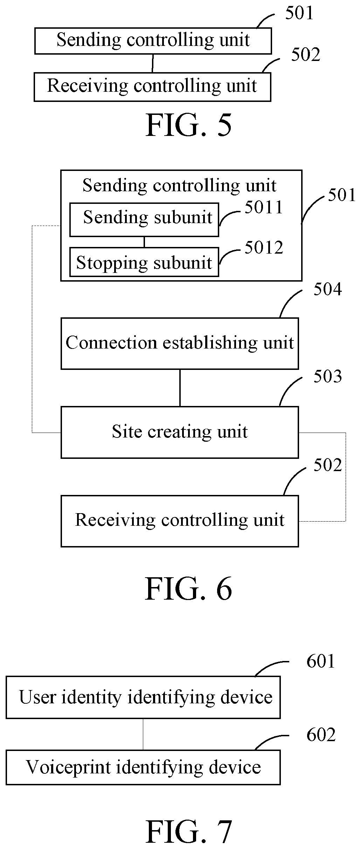

In an embodiment, the present invention further provides a user identity identifying device, and as shown in FIG. 5, the specific implementation structure of the user identity identifying device includes a sending controlling unit 501 and a receiving processing unit 502.

The sending controlling unit 501 is configured to send voice information of a client joining in a voice site of a call center to a voiceprint identifying device through a channel of the voice site; and the receiving processing unit 502 is configured to receive a voiceprint identification result returned by the voiceprint identifying device, and validate the user identity corresponding to the voice information of the client according to the voiceprint identification result. The voice site is a communication form in which the site members transfer voice signals in a form of single channel. The control terminal (the user identity identifying device in the embodiment of the present invention) of the voice site is capable of extracting the sound information of individual site members in the voice site.

Since pre-setting a voice signal with the duration of 8 seconds is sufficient to meet the requirement of voiceprint identification, it is enough for the time during which the voice signals are transferred to the voiceprint identifying system last for 8 seconds.

As shown in FIG. 6, the above device provided by the embodiment of the present invention further includes a site creating unit 503, which is configured to create a voice site and join the client in the voice site after the telephone service is established. The voice site may also exist before the establishment of the telephone service, and after the telephone service is established, the site creating unit 503 is further configured to join the client of the telephone service in the voice site. Specifically, the joining the client of the telephone service in the voice site refers to establishing a site channel for the client through which the voice information is transferred by considering the client to be a site unit of the voice site.

As shown in FIG. 6, the above device provided by the embodiment of the present invention further includes a connection establishing unit 504, which is configured to establish a connection between the voice site and the voiceprint identifying device before the sending controlling unit 501 works.

As shown in FIG. 6, the above sending controlling unit of the device provided by the embodiment of the present invention further includes a sending subunit 5011 configured to send the voice information of the client to the voiceprint identifying device and start timing, and a stopping subunit 5012 configured to stop sending the voice information of the client to the voiceprint identifying device when a duration of the timing reaches a pre-set duration.

The above user identity identifying device provided by the embodiment of the present invention may be specifically a service system in the call center.

For the device provided by the embodiment of the present invention, the voice signals of a client are sent to a voiceprint identifying device in real time through a channel of a voice site without the need of recording the sound signals of the client, and thus the time required for the user identity identification is reduced, and the hysteresis in the user identity identification is decreased effectively.

In an embodiment, the present invention further provides a call center system, and as shown in FIG. 7, the specific implementation structure of the call center system include a user identity identifying device 601 and a voiceprint identifying device 602.

The user identity identifying device 601 is configured to send the voice information of a client joining in a voice site of a call center to the voiceprint identifying device 602 through a channel of the voice site and is further configured to receive a voiceprint identifying result returned by the voiceprint identifying device 602, validate the user identity corresponding to the voice information of the client according to the voiceprint identification result after a telephone service is established. The voiceprint identifying device 602 is configured to identify the voice information of the client and return the voiceprint identification result to the user identity identifying device 601.

The voice site is a communication form in which the site members transfer voice signals in a form of single channel. The control terminal (the user identity identifying device 601) of the voice site is capable of extracting the sound information of individual site members in the voice site.

Since pre-setting a voice signal with the duration of 8 seconds is sufficient to meet the requirement of voiceprint identification, it is enough for the time during which the voice signals are transferred to the voiceprint identifying system last for 8 seconds.

In the above system provided by the embodiment of the present invention, the voiceprint identifying device 602 is further configured to return the voiceprint identification result to the user identity identifying device 601 through the channel of the voice site, or, is further configured to return the voiceprint identification result to the user identity identifying device through an established connection with the user identity identifying device 601.

In the above system provided by embodiments of the present invention, the specific operation modes of the user identity identifying device 601 may refer to the above user identity identifying device provided by the embodiments of the present invention, and is not repeated any more.

For the call center system provided by the embodiments of the present invention, the voice signals of a client are sent to a voiceprint identifying device in real time through a channel of a voice site without the need of recording the sound signals of the client, and thus the time required for the user identity identification is reduced, and the hysteresis in the user identity identification is decreased effectively.

What are described above are only some exemplary implementations of the present invention, and do not limit the scope of the present invention, any changes and substitutions in the technical scope disclosed in the present invention that readily occur to persons of skill in the art are contemplated in the scope of the present invention. So, the protection scope of the present invention should only be limited by the scope of the claims.

## Claims

1. A user identity identifying method, comprising:
sending (S101) voice information of a client joining in a voice site of a call center to a voiceprint identifying device by using a channel of the voice site; and
receiving (S102) a voiceprint identification result returned by the voiceprint identifying device, and validating a user identity corresponding to the voice information of the client according to the voiceprint identification result;
**characterised in that** the sending the voice information of the client joining in the voice site to the voiceprint identifying device comprises:
sending the voice information of the client to the voiceprint identifying device, and starting timing; and
stopping sending the voice information of the client to the voiceprint identifying device when a duration of the timing reaches a pre-set duration.

2. The method according to claim 1, further comprising:
creating a voice site comprising the client;
wherein the sending the voice information of the client joining in the voice site of the call center to the voiceprint identifying device by using the channel of the voice site comprises:
sending the voice information of the client joining in the successfully created voice site of the call center to the voiceprint identifying device by using a channel of the voice site.

3. The method according to claim 2, wherein the creating a voice site comprising the client comprises:
creating a voice site, and controlling the voice site to join the client A in the voice site.

4. The method according to claim 3, wherein the creating a voice site comprises:
receiving a site request message, searching for the number of idle channels, and determining whether the number of the idle channels meets number of users requesting to join in the voice site, if sufficient idle channels exist, the idle channels required by creating the voice site are occupied to create the voice site.

5. The method according to claim 1, further comprising:
joining the client in the voice site through the voice site.

6. The method according to any one of claims 1 to 4, further comprising:
establishing a connection between the voice site and the voiceprint identifying device;
wherein the sending the voice information of the client joining in the voice site to the voiceprint identifying device comprises:
sending the voice information of the client joining in the voice site to the voiceprint identifying device after the voice site is successfully connected with the voiceprint identifying device.

7. A user identity identifying device, comprising a sending control unit (501) and a receiving processing unit (502), wherein:
the sending control unit (501) is configured to send voice information of a client joining in a voice site of a call center to a voiceprint identifying device by using a channel of the voice site; and
the receiving processing unit (502) is configured to receive a voiceprint identification result returned by the voiceprint identifying device, and validating a user identity corresponding to the voice information of the client according to the voiceprint identification result;
**characterised in that** the sending control unit (501) further comprises:
a sending subunit (5011), configured to send the voice information of the client to the voiceprint identifying device, and start timing; and
a stopping subunit (5012), configured to stop sending the voice information of the client to the voiceprint identifying device when a duration of the timing reaches a pre-set duration.

8. The device according to claim 7, further comprising a site creating unit (503), configured to create a voice site comprising the client.

9. The device according to claim 7, further comprising a connection establishing unit (504), configured to establish a connection between the voice site and the voiceprint identifying device.

10. A call center system, comprising a user identity identifying device (601) and a voiceprint identifying device (602), wherein:
the user identity identifying device (601) is configured to send voice information of a client joining in a voice site of a call center to the voiceprint identifying device by using a channel of the voice site, and receive a voiceprint identification result returned by the voiceprint identifying device (602), validate a user identity corresponding to the voice information of the client according to the voiceprint identification result; and
the voiceprint identifying device (602) is configured to identify the voice information of the client and return the voiceprint identification result to the user identity identifying device;
**characterised in that**
the user identity identifying device (601) is configured to send the voice information of the client to the voiceprint identifying device, and start timing, and configured to stop sending the voice information of the client to the voiceprint identifying device when a duration of the timing reaches a pre-set duration.

11. The system according to claim 10, wherein the voiceprint identifying device (602) is further configured to return the voiceprint identification result to the user identity identifying device through the channel of the voice site, or return the voiceprint identification result to the user identity identifying device through an established connection with the user identity identifying device.

## Patentansprüche

1. Benutzeridentitätsidentifizierungsverfahren, das Folgendes umfasst:
Senden (S101) von Sprachinformationen eines Kunden, der einer Sprachstelle eines Callcenters beitritt, an eine Sprachabdruckidentifizierungsvorrichtung unter Verwendung eines Kanals der Sprachstelle; und
Empfangen (S102) eines Sprachabdruckidentifizierungsergebnisses, das von der Sprachabdruckidentifizierungsvorrichtung zurückgesendet wird, und Validieren einer Benutzeridentität, die den Sprachinformationen des Kunden entspricht, gemäß dem Sprachabdruckidentifizierungsergebnis;
**dadurch gekennzeichnet, dass** das Senden der Sprachinformationen des Kunden, der der Sprachstelle beitritt, an die Sprachabdruckidentifizierungsvorrichtung Folgendes umfasst:
Senden der Sprachinformationen des Kunden an die Sprachabdruckidentifizierungsvorrichtung und Starten einer Zeitmessung; und
Stoppen des Sendens der Sprachinformationen des Kunden an die Sprachabdruckidentifizierungsvorrichtung, wenn eine Dauer der Zeitmessung eine vorgegebene Dauer erreicht.

2. Verfahren nach Anspruch 1, das ferner Folgendes umfasst:
Erzeugen einer Sprachstelle, die den Kunden umfasst;
wobei das Senden der Sprachinformationen des Kunden, der der Sprachstelle des Callcenters beitritt, an die Sprachabdruckidentifizierungsvorrichtung unter Verwendung des Kanals der Sprachstelle Folgendes umfasst:
Senden der Sprachinformationen des Kunden, der der erfolgreich erzeugten Sprachstelle des Callcenters beitritt, an die Sprachabdruckidentifizierungsvorrichtung unter Verwendung eines Kanals der Sprachstelle.

3. Verfahren nach Anspruch 2, wobei das Erzeugen einer Sprachstelle, die den Kunden umfasst, Folgendes umfasst:
Erzeugen einer Sprachstelle und Steuern der Sprachstelle, so dass der Kunde A der Sprachstelle beitritt.

4. Verfahren nach Anspruch 3, wobei das Erzeugen einer Sprachstelle Folgendes umfasst:
Empfangen einer Stellenanforderungsnachricht, Suchen nach der Anzahl von Leerkanälen und Bestimmen, ob die Anzahl der Leerkanäle der Anzahl von Benutzern, die anfragen, der Sprachstelle beizutreten, entspricht, falls ausreichend Leerkanäle vorhanden sind, werden die durch das Erzeugen der Sprachstelle benötigten Leerkanäle belegt, so dass die Sprachstelle erzeugt wird.

5. Verfahren nach Anspruch 1, das ferner Folgendes umfasst:
Beitreten des Kunden zu der Sprachstelle durch die Sprachstelle.

6. Verfahren nach einem der Ansprüche 1 bis 4, das ferner Folgendes umfasst:
Aufbauen einer Verbindung zwischen der Sprachstelle und der Sprachabdruckidentifizierungsvorrichtung;
wobei das Senden der Sprachinformationen des Kunden, der der Sprachstelle beitritt,
an die Sprachabdruckidentifizierungsvorrichtung Folgendes umfasst:
Senden der Sprachinformationen des Kunden, der der Sprachstelle beitritt, an die Sprachabdruckidentifizierungsvorrichtung, nachdem die Sprachstelle erfolgreich mit der Sprachabdruckidentifizierungsvorrichtung verbunden ist.

7. Benutzeridentitätsidentifizierungsvorrichtung, die eine Sendesteuereinheit (501) und eine Empfangsverarbeitungseinheit (502) umfasst, wobei:
die Sendesteuereinheit (501) dazu konfiguriert ist, Sprachinformationen eines Kunden, der einer Sprachstelle eines Callcenters beitritt, an eine Sprachabdruckidentifizierungsvorrichtung unter Verwendung eines Kanals der Sprachstelle zu senden; und
die Empfangsverarbeitungseinheit (502) dazu konfiguriert ist, ein Sprachabdruckidentifizierungsergebnis, das von der Sprachabdruckidentifizierungsvorrichtung zurückgesendet wird, zu empfangen, und
eine Benutzeridentität, die den Sprachinformationen des Kunden entspricht, gemäß dem Sprachabdruckidentifizierungsergebnis zu validieren;
**dadurch gekennzeichnet, dass** die Sendesteuereinheit (501) ferner Folgendes umfasst:
eine Sendeuntereinheit (5011), die dazu konfiguriert ist, die Sprachinformationen des Kunden an die Sprachabdruckidentifizierungsvorrichtung zu senden, und eine Zeitmessung zu starten; und
eine Stoppuntereinheit (5012), die dazu konfiguriert ist, das Senden der Sprachinformationen des Kunden an die Sprachabdruckidentifizierungsvorrichtung zu stoppen, wenn eine Dauer der Zeitmessung eine vorgegebene Dauer erreicht.

8. Vorrichtung nach Anspruch 7, die ferner eine Stellenerzeugungseinheit (503) umfasst, die dazu konfiguriert ist, eine Sprachstelle, die den Kunden umfasst, zu erzeugen.

9. Vorrichtung nach Anspruch 7, die ferner eine Verbindungsaufbaueinheit (504) umfasst, die dazu konfiguriert ist, eine Verbindung zwischen der Sprachstelle und der Sprachabdruckidentifizierungsvorrichtung aufzubauen.

10. Callcentersystem, das eine Benutzeridentitätsidentifizierungsvorrichtung (601) und eine Sprachabdruckidentifizierungsvorrichtung (602) umfasst, wobei:
die Benutzeridentitätsidentifizierungsvorrichtung (601) dazu konfiguriert ist, Sprachinformationen eines Kunden, der einer Sprachstelle eines Callcenters beitritt, an die Sprachabdruckidentifizierungsvorrichtung unter Verwendung eines Kanals der Sprachstelle zu senden, und ein Sprachabdruckidentifizierungsergebnis, das von der Sprachabdruckidentifizierungsvorrichtung (602) zurückgesendet wird, zu empfangen, eine Benutzeridentität, die den Sprachinformationen des Kunden entspricht, gemäß dem Sprachabdruckidentifizierungsergebnis zu validieren; und
die Sprachabdruckidentifizierungsvorrichtung (602) dazu konfiguriert ist, die Sprachinformationen des Kunden zu identifizieren und das Sprachabdruckidentifizierungsergebnis an die Benutzeridentitätsidentifizierungsvorrichtung zurückzusenden;
**dadurch gekennzeichnet, dass**
die Benutzeridentitätsidentifizierungsvorrichtung (601) dazu konfiguriert ist, die Sprachinformationen des Kunden an die Sprachabdruckidentifizierungsvorrichtung zu senden, und eine Zeitmessung zu starten, und dazu konfiguriert ist, das Senden der Sprachinformationen des Kunden an die Sprachabdruckidentifizierungsvorrichtung zu stoppen, wenn eine Dauer der Zeitmessung eine vorgegebene Dauer erreicht.

11. System nach Anspruch 10, wobei die Sprachabdruckidentifizierungsvorrichtung (602) ferner dazu konfiguriert ist, das Sprachabdruckidentifizierungsergebnis an die Benutzeridentitätsidentifizierungsvorrichtung durch den Kanal der Sprachstelle zurückzusenden, oder das Sprachabdruckidentifizierungsergebnis an die Benutzeridentitätsidentifizierungsvorrichtung durch eine aufgebaute Verbindung mit der Benutzeridentitätsidentifizierungsvorrichtung zurückzusenden.

## Revendications

1. Procédé d'identification d'identité d'utilisateur, comprenant :
l'envoi (S101) d'informations vocales d'un client se joignant à un site vocal d'un centre d'appel à un dispositif d'identification d'empreinte vocale en utilisant un canal du site vocal ; et
la réception (S102) d'un résultat d'identification d'empreinte vocale renvoyé par le dispositif d'identification d'empreinte vocale, et la validation d'une identité d'utilisateur correspondant aux informations vocales du client conformément au résultat d'identification d'empreinte vocale ;
**caractérisé en ce que** l'envoi des informations vocales du client se joignant au site vocal au dispositif d'identification d'empreinte vocale comprend :
l'envoi des informations vocales du client au dispositif d'identification d'empreinte vocale, et le déclenchement d'une temporisation ; et
l'arrêt de l'envoi des informations vocales du client au dispositif d'identification d'empreinte vocale lorsqu'une durée de la temporisation atteint une durée prédéfinie.

2. Procédé selon la revendication 1, comprenant en outre :
la création d'un site vocal comprenant le client ;
dans lequel l'envoi des informations vocales du client se joignant au site vocal du centre d'appel au dispositif d'identification d'empreinte vocale en utilisant le canal du site vocal comprend :
l'envoi des informations vocales du client se joignant au site vocal créé avec succès du centre d'appel au dispositif d'identification d'empreinte vocale en utilisant un canal du site vocal.

3. Procédé selon la revendication 2, dans lequel la création d'un site vocal comprenant le client comprend :
la création d'un site vocal, et la commande du site vocal pour qu'il se joigne au client A sur le site vocal.

4. Procédé selon la revendication 3, dans lequel la création d'un site vocal comprend :
la réception d'un message de demande de site, la recherche du nombre de canaux inactifs,
et la détermination du fait de savoir si le nombre des canaux inactifs respecte le nombre d'utilisateurs demandant de se joindre au site vocal, et s'il existe suffisamment de canaux inactifs, les canaux inactifs exigés par la création du site vocal sont occupés afin de créer le site vocal.

5. Procédé selon la revendication 1, comprenant en outre :
le fait de joindre le client au site vocal par l'intermédiaire du site vocal.

6. Procédé selon l'une quelconque des revendications 1 à 4, comprenant en outre :
l'établissement d'une connexion entre le site vocal et le dispositif d'identification d'empreinte vocale ;
dans lequel l'envoi des informations vocales du client se joignant au site vocal au dispositif d'identification d'empreinte vocale comprend :
l'envoi des informations vocales du client se joignant au site vocal au dispositif d'identification d'empreinte vocale après que le site vocal a réussi à se connecter au dispositif d'identification d'empreinte vocale.

7. Dispositif d'identification d'identité d'utilisateur, comprenant une unité de commande d'envoi (501) et une unité de traitement de réception (502), dans lequel :
l'unité de commande d'envoi (501) est configurée pour envoyer des informations vocales d'un client se joignant à un site vocal d'un centre d'appel à un dispositif d'identification d'empreinte vocale en utilisant un canal du site vocal ; et
l'unité de traitement de réception (502) est configurée pour recevoir un résultat d'identification d'empreinte vocale renvoyé par le dispositif d'identification d'empreinte vocale, et valider une identité d'utilisateur correspondant aux informations vocales du client conformément au résultat d'identification d'empreinte vocale ;
**caractérisé en ce que** l'unité de commande d'envoi (501) comprend en outre :
une sous-unité d'envoi (5011), configurée pour envoyer les informations vocales du client au dispositif d'identification d'empreinte vocale, et déclencher une temporisation ;
et
une sous-unité d'arrêt (5012), configurée pour arrêter l'envoi des informations vocales du client au dispositif d'identification d'empreinte vocale lorsqu'une durée de la temporisation atteint une durée prédéfinie.

8. Dispositif selon la revendication 7, comprenant en outre une unité de création de site (503), configurée pour créer un site vocal comprenant le client.

9. Dispositif selon la revendication 7, comprenant en outre une unité d'établissement de connexion (504), configurée pour établir une connexion entre le site vocal et le dispositif d'identification d'empreinte vocale.

10. Système de centre d'appel, comprenant un dispositif d'identification d'identité d'utilisateur (601) et un dispositif d'identification d'empreinte vocale (602), dans lequel :
le dispositif d'identification d'identité d'utilisateur (601) est configuré pour envoyer des informations vocales d'un client se joignant à un site vocal d'un centre d'appel au dispositif d'identification d'empreinte vocale en utilisant un canal du site vocal, et
recevoir un résultat d'identification d'empreinte vocale renvoyé par le dispositif d'identification d'empreinte vocale (602), valider une identité d'utilisateur correspondant aux informations vocales du client conformément au résultat d'identification d'empreinte vocale ; et
le dispositif d'identification d'empreinte vocale (602) est configuré pour identifier les informations vocales du client et renvoyer le résultat d'identification d'empreinte vocale au dispositif d'identification d'identité d'utilisateur ;
**caractérisé en ce que**
le dispositif d'identification d'identité d'utilisateur (601) est configuré pour envoyer les informations vocales du client au dispositif d'identification d'empreinte vocale, et
déclencher une temporisation, et est configuré pour arrêter l'envoi des informations vocales du client au dispositif d'identification d'empreinte vocale lorsqu'une durée de la temporisation atteint une durée prédéfinie.

11. Système selon la revendication 10, dans lequel le dispositif d'identification d'empreinte vocale (602) est en outre configuré pour renvoyer le résultat d'identification d'empreinte vocale au dispositif d'identification d'identité d'utilisateur par l'intermédiaire du canal du site vocal, ou renvoyer le résultat d'identification d'empreinte vocale au dispositif d'identification d'identité d'utilisateur par l'intermédiaire d'une connexion établie au dispositif d'identification d'identité d'utilisateur.
